# EUROPEAN PATENT SPECIFICATION

(11) **EP 2 319 325 B1**
(45) Date of publication and mention of the grant of the patent: **26.12.2012**
(21) Application number: 09306057.2
(22) Date of filing: 04.11.2009
(51) Int. Cl.: A21D 2/18, A21D 10/00

(54) **New bread improver and use thereof for bread making**
Neues Brotbackmittel und dessen Verwendung zur Brotherstellung
Nouvel améliorant du pain et son utilisation en boulangerie

(43) Date of publication of application: 11.05.2011
(73) Proprietor: Lesaffre et Compagnie, 75001 Paris (FR)
(72) Inventor: Caliskan, Ayten, 01960, Ceyhan Adana (TR); Julien, Pascal, 59700, MARCQ-EN-BAROEUL (FR)
(74) Representative: Cabinet Plasseraud

(56) References cited:
- WO-A1-2005/023007
- WO-A2-2008/034999
- FR-A1- 2 736 802
- GB-A- 592 011
- GB-A- 1 538 360
- JP-A- 5 153 897
- JP-A- 2009 017 848
- RO-B1- 118 620
- US-A- 3 219 455

## Description

### TECHNICAL FIELD

The present invention relates to the field of bread making, and in particular to the field of bread improvers.

### BACKGROUND OF THE INVENTION

Hydrocolloids are water soluble macromolecules that are commonly used as thickeners in food industry.

One example of hydrocolloid is CMC, also known as cellulose gum or carboxymethylcellulose.

CMC has been used in bakery by mixing it with the ingredients of the dough.

JP2009-17848 thus discloses the use of CMC for improving the water-holding power of bread and the quality of bread. CMC is used directly into the dough comprising flour, sugar, powdered milk, salt, butter, water and yeast.

The characteristics of the CMC used in JP2009-017848 are the following: 0.7 to 1.2 degree of etherification, 100 to 500 mPa.s⁻¹ viscosity of a 2% aqueous solution, 5 to 30 g/l of water absorption and 0.5 to 0.7 thioxotropic property at 10 000 mPa.

CMC may also be found in some bread improvers. However, in this instance, CMC is not the main component of the bread improver.

Indeed, WO2005/023007 discloses a bread improver comprising 50% to 95% of a combination of CMC and at least another type of fiber material, preferably chosen among inulin and cellulose. The bread improver disclosed in WO2005/023007 provides bread having at least the same nutritional quality as regular wholemeal bread, but without quickly becoming stale. Said bread improver therefore improves the softness of the crumb and prolongs softness in time.

FR2736802A1 discloses a bread improver comprising 3.75% CMC, alpha-amylases, ascorbic acid and wheat gluten, while RO118620B1 discloses a bread improver comprising 3% CMC, together with ascorbic acid, wheat gluten, emulsifiers and enzymes.

In bakery, bread improvers are very interesting tools, not to say essential. Each kind of bread has to rise up to the particular expectations of the baker and, of course, of the consumer. Thus, a bread improver useful for a specific type of bread could be of no interest for another type of bread. Thus, in the field of bakery, there is still a need for providing other kinds of bread improvers capable of improving dough tolerance, volume of bread and/or quality of bread. Furthermore, it is of great interest to have bread improvers that are cost-effective for bakers, particularly by improving bread yield.

### SUMMARY OF THE INVENTION

The present invention relates to a bread improver having the features of claim 1.

Another object of the invention is a process for preparing dough, comprising the step of mixing a bread improver having the features of claim 1 with the ingredients of the dough.

Another object of the invention is the use of an improver having the features of claim 1 for improving bread yield and/or dough tolerance and/or the volume of bread and/or the quality of bread.

### DETAILED DESCRIPTION OF THE INVENTION

The present invention aims at providing new bread improvers capable of improving bread yield, dough tolerance, volume of bread and/or quality of bread.

By combining a high amount of CMC with at least two improving agents, the Inventors have obtained, surprisingly, new bread improvers that allow a greater improvement of dough and bread properties by comparison with standard bread improvers.

Indeed, one of the advantages of the bread improver according to the invention is to improve bread yield, which means that an extra number of breads can be obtained by comparison with standard bread improvers, starting from an equal quantity of flour. Other advantages of the bread improver according to the invention are improving dough tolerance, volume of bread and/or quality of bread by comparison with standard bread improvers.

Furthermore, the bread improver according to the invention enables long-term storage, is easy to store and is easy to use.

The bread improver according to the invention particularly improves bread yield, dough tolerance, volume of bread and quality of bread of the Turkish Somun bread, also called Somun Ekmek.

By *"improving bread yield",* it is meant to increase the number of breads produced from a given weight of flour.

By *"improving dough tolerance",* it is meant that after it rises, particularly during the second fermentation phase, the dough substantially maintains its shape for a longer time before it collapses.

By *"improving the volume of bread",* it is meant to increase the volume of the bread.

By *"improving the quality of bread",* it is meant to improve bread crust and/or bread cut and/or bread color.

Crust is improved when the crust of the bread is thin and shining.

Cut is improved when the cut on the bread is well opened at the place where the dough roll was scarified before being baked in the oven.

Color is improved when the color of the bread is between wheat and gold and when it is more homogenous.

The present invention thus relates to a bread improver comprising from 90% to 95% by weight of CMC and at least one improving agent.

Herein, the term *"CMC"* is equivalent to sodium carboxymethylcellulose, carboxymethylcellulose or cellulose gum.

An improving agent is a compound that improves at least one property of the dough and/or of the bread.

The at least one improved property is for example bread yield, dough tolerance, volume of bread or quality of bread.

One improving agent may improve at least two properties of the dough and/or of the bread.

According to the present invention, the at least two improving agents are chosen among an oxidizing agent, a reducing agent, an enzyme and an emulsifier.

The oxidizing agent is preferably chosen among ascorbic acid and/or ascorbate. A more preferred oxidizing agent is ascorbic acid.

The reducing agent is preferably chosen among L-cysteine monohydrochloride, deactivated yeast and/or glutathione.

The enzyme is preferably chosen among alpha amylase, beta amylase, maltogenic amylase, amyloglucosidase, pullulanase, hemicellulase, lipase, glycolipase, phospholipase, glucose oxidase and/or peroxydase. A more preferred enzyme is chosen among amyloglucosidase, hemicellulase, glucose oxidase, alpha amylase and/or phospholipase.

The emulsifier is preferably chosen among monoglyceride, diglyceride, sodium stearoyl lactylate, calcium stearoyl lactylate and/or diacetyl tartaric ester of mono- and di-glyceride (for example DATEM). A more preferred emulsifier is DATEM.

In one embodiment, the bread improver does not comprise any reducing agent.

The present invention for example relates to a bread improver as defined above, comprising at least from:
- 90 to 95% of CMC,
- 0.1% to 5% of at least one oxidizing agent,
- 0.1% to 5% of at least one reducing agent,
- 0.1% to 5% of at least one enzyme, and/or
- 0.1 % to 5% at least one emulsifier
   (percentages expressed by weight of the bread improver).

In a preferred embodiment, the present invention relates to a bread improver as defined above, comprising the following improving agents: at least one enzyme, at least one emulsifier and at least one oxidizing agent.

The bread improver according to the invention for example comprises at least from:
- 90 to 95 % of CMC,
- 0.8% to 1.4% of at least one oxidizing agent,
- 2% to 2.5% of at least one enzyme, and
- 1.8% to 2.5% at least one emulsifier
   (percentages expressed by weight of the bread improver).

In a still preferred embodiment, the bread improver according to the invention comprises the following enzymes: amyloglucosidase, hemicellulase, glucose oxidase, alpha-amylase and phospholipase.

For example, a preferred bread improver comprises:
- CMC,
- amyloglucosidase, hemicellulase, glucose oxidase, alpha-amylase and phospholipase, as enzymes,
- DATEM, as emulsifier, and
- ascorbic acid, as oxidizing agent.

The present invention also relates to a bread improver as defined above, further comprising at least one hydrocolloid other than CMC.

The hydrocolloid other than CMC is preferably chosen among guar gum and/or xanthan gum.

A preferred bread improver according to the invention comprises guar gum and xanthan gum.

The present invention still preferably relates to a bread improver as defined above, comprising:
- 93.6 % of CMC,
- 1.1 % of ascorbic acid,
- 2.2% of amyloglucosidase, hemicellulase, glucose oxidase, alpha-amylase and phospholipase,
- 2.1% of DATEM, and
- 1.0% of guar gum and xanthan gum.

Such a bread improver is for example bread improver A as disclosed in the Example.

The bread improver A according to the invention improves bread yield, dough tolerance, volume of bread and quality of bread, by comparison with standard bread improvers already used to improve these parameters (see the "Example" section).

CMC and the at least one improving agent interact on the properties of dough and thus on the properties of the bread that will be obtained from said dough. The particular combination of CMC and of the at least one improving agent enables one to obtain a bread improver that has greater effects on the properties of dough and thus on the properties of the bread that will be obtained from said dough than standard known bread improvers.

The bread improver does not comprise any flour and/or starch and /or inulin and/or cellulose and/or dextrose.

The bread improver according to the invention is preferably in a form that allows long term storage.

The shelf life of the bread improver according to the invention is preferably at least of 1 year.

The bread improver according to the invention preferably has a dry matter content of at least 85% by weight, more preferably of at least 90% by weight, and preferably still of at least 95% by weight.

The invention preferably relates to a bread improver as defined above, characterized in that said bread improver is in pulverulent form.

Viscosity of the CMC used in the bread improver modifies the properties of CMC and thus may modify its interaction with the at least one improving agent composing the bread improver, as well as with the ingredients of the dough.

The Inventors have found, surprisingly, that bread yield, dough tolerance, volume of bread and quality of bread are greatly improved by using a CMC whose viscosity is at least 2000 mPa.s⁻¹ in a 1% aqueous solution and whose degree of substitution is from 0.85 to 0.95.

The viscosity of CMC is for example measured by means of a Brookfield LV viscometer, at 25°C.

In a particular embodiment, the present invention thus relates to a bread improver as defined above, characterized in that CMC has a viscosity of at least 2000 mPa.s⁻¹ in a 1% aqueous solution.

In a preferred embodiment, the bread improver according to the invention comprises a CMC whose viscosity is comprised from 2500 to 4000 mPa.s⁻¹ in a 1% aqueous solution.

The bread improver may be added in the dough in a quantity comprised from 0.4% to 5%, preferably from 0.5% to 2%, still preferably from 0.6% to 1%, the percentages being expressed by weight of the total flour in the dough.

For example, the dough according to the invention comprises 0.7% of the bread improver as defined above, the percentage being expressed by weight of the total flour in the dough.

The expression *"x% of bread improver expressed by weight of the total flour in the dough"* means that there are x grams of bread improver for 100 grams of total flour in the dough.

The dough may also comprise other ingredients, such as salt and/or sourdough.

The yeast is *Saccharomyces cerevisiae,* the so-called bakers' yeast.

The yeast used in the dough is active yeast which enables the fermentation of the dough.

The yeast may be dry yeast, compressed yeast, cream yeast, or yeast in any suitable form for fermentation.

Flour may be chosen among any cereal flour, such as wheat flour, rye flour, maize flour or a mixture thereof. Preferred flour is wheat flour, for example wheat flour type 650.

Another object of the invention is a process for preparing dough, comprising a step of mixing, wherein the bread improver as defined above is mixed with dough ingredients.

The dough ingredients are particularly water, flour, salt and yeast.

Other possible dough ingredients are as defined above.

The process for preparing dough further comprises the following steps:
- a step of kneading,
- preferably a first step of fermentation,
- a step of dividing, and
- a second step of fermentation.

The man skilled in the art knows which conditions are suitable for each step of dough preparation.

The step of kneading lasts for example from 5 minutes to 1 hour.

The first step of fermentation is optional, but if it is done, the first step of fermentation lasts preferably from 5 minutes to 1 hour.

The step of dividing defines shape, size and weigh of the breads obtained after baking the dough.

The second step of fermentation lasts preferably from 30 min to 3 hours, still preferably from 2 hours to 3 hours.

Before the step of baking, a cut is made on the top of the dough piece.

The present invention particularly relates to a process as defined above, characterized in that the dough comprises from 0.4% to 5% of said bread improver, the percentages being expressed by weight of the total flour in the dough.

The present invention preferably relates to a process as defined above, characterized in that the dough comprises from 0.5% to 2% of said bread improver, still preferably from 0.6% to 1 %, the percentages being expressed by weight of the total flour in the dough.

For example, the dough comprises 0.7% of the bread improver as defined above, the percentage being expressed by weight of the total flour in the dough.

The Inventors have found, surprisingly, that bread yield, dough tolerance, volume of bread, and/or quality of bread can be further improved when water is added in successive small quantities to flour, bread improver, salt, yeast and possible other ingredients of the dough.

In a preferred embodiment, the present invention thus relates to a process as defined above, characterized in that water is added in successive small quantities.

The present invention particularly relates to a process for preparing dough as defined above, for the production of Somun bread.

The present invention also relates to a dough obtained by carrying out the above process for preparing dough.

The present invention also relates to a process of bread making, comprising a step of baking a dough, said dough being defined above.

The baking of the dough is carried out in an oven, preferably from 15 minutes to 21 minutes, at a temperature preferably comprised from 245°C to 280°C.

The present invention also relates to the use of a bread improver as defined above for improving bread yield, dough tolerance, volume of bread, and/or quality of bread.

The present invention preferably relates to the use of an improver as defined above for improving bread yield, dough tolerance, the volume of bread and the quality of bread.

The present invention still preferably relates to the use of a bread improver as defined above for improving bread yield, dough tolerance, volume of bread, and/or quality of bread, wherein said bread is Somun bread.

The invention is further explained by the following non-limiting illustrative Example.

### EXAMPLE: Improvement of Somun bread by using a bread improver according to the invention

### Material and method

### i) Bread improver

The bread improver A according to the invention has the following composition:
- 93.6% of CMC,
- 1.1 % of ascorbic acid,
- 2.2% of amyloglucosidase, hemicellulase, glucose oxidase, alpha-amylase and phospholipase,
- 2.1 % of DATEM, and
- 1 % of guar gum and xanthan gum.

The CMC used in bread improver A has the following properties:
- viscosity of a 1% aqueous solution: 2500 to 4000 mPa.s⁻¹ and
- degree of substitution: 0.85 to 0.95.

Four commercial bread improvers commonly used by bakers to make Somun bread were used as standard improvers. These standard improvers are referred to as B, C, D and E.

### ii) Process for bread making

The effect of bread improver A was assessed on different recipes for preparing Somun bread. The effect of bread improver A was compared to those of a standard bread improver used in the same recipe.

Bread improver A was added in the dough in an amount of 0.7%, the percentage being expressed by weight of the total flour in the dough.
Tables 1 to 4 show the different recipes.
Table 5 shows the process for Somun bread baking for each type of recipe.

The baked breads weighed 300 grams.

**Table 1**

| **Recipe type 1** | **Standard bread Improver B** | **Bread improver A** |
|---|---|---|
| Flour (kg) | 150 | 150 |
| Water (l) | 98 | 112 |
| Salt (kg) | 1.8 | 1.8 |
| Yeast (kg/l) | 2 | 2 |
| Bread improver (kg) | 0.02 | 1.05 |
| Sourdough (kg) | 18.9 | 19.7 |

**Table 2**

| **Recipe type 2** | **Standard bread Improver C** | **Bread improver A** |
|---|---|---|
| Flour (kg) | 150 | 150 |
| Water (l) | sq | sq |
| Salt (kg) | 1.65 | 1.65 |
| Yeast (kg/l) | 4 | 4 |
| Bread improver (kg) | 0.4 | 1.05 |
| Sourdough (kg) | 14 | 14 |

| | | |
|---|---|---|
| *sq: sufficient quantity* | | |

**Table 3**

| **Recipe type 3** | **Standard bread improver D** | **Bread improver A** |
|---|---|---|
| Flour (kg) | 325 | 325 |
| Water (l) | sq | sq |
| Salt (kg) | 3.5 | 3.5 |
| Yeast (kg/l) | 7 | 7 |
| Bread improver (kg) | 0.7 | 2.2 |
| Sourdough (kg) | 30 | 30 |

| | | |
|---|---|---|
| *sq: sufficient quantity* | | |

**Table 4**

| **Recipe type 4** | **Standard bread improver E** | **Bread improver A** |
|---|---|---|
| Flour (kg) | 300 | 300 |
| Water (l) | sq | sq |
| Salt (kg) | 4.5 | 4.5 |
| Yeast (kg/l) | 6 | 6 |
| Bread improver (kg) | 1 | 2.1 |
| Sourdough (kg) | 0 | 0 |

| | | |
|---|---|---|
| *sq: sufficient quantity* | | |

**Table 5**

| **Process** | **Recipe type 1** | **Recipe type 2** | **Recipe type 3** | **Recipe type 4** |
|---|---|---|---|---|
| **Mixing + kneading** | 21 min for B and | 38 min for C | 46 min for D | 55 min for E |
| | 22 min for A | 40 min for A | 55 min for A | 55 min for A |
| **1^{st} step of fermentation** | 10 min for B & | 0 min for C & | 0 for D & A | 40 min for E |
| | A | A | | 30 min for A |
| **Step of dividing** | 385 grams | 370 grams | 380 grams | 375 grams |
| **2^{nd} step of fermentation** | 180 min | 140 min | 150 min | 180 min |
| **Baking** | 19 min at 245°C | 21 min at 280°C | 21 min at | 20 min at |
| | | | 245°C | 245°C |

The cut on the top of the dough piece is made just before baking.

### Results

Different parameters were assessed: number of extra breads made from 100 kg of flour, dough tolerance, volume, crust, cut and color of the bread.

The results are shown in Table 6. For each parameter, the effect is indicated by reference to the standard bread improver (B, C, D or E).

**Table 6**

| | Number of extra breads/100 kg of flour | Volume | Crust | Cut | Color | Tolerance |
|---|---|---|---|---|---|---|
| A versus B | 28 | + | + | + | + | + |
| A versus C | 34 | + | + | + | + | + |
| A versus D | 42 | + | + | + | + | + |
| A versus E | 38 | + | + | + | + | + |

| | | | | | | |
|---|---|---|---|---|---|---|
| "+ *" means better than the reference B, C, D or E* | | | | | | |

Standard bread improvers are already used to improve the quality of Somun bread.

The bread improver A according to the invention allows a better improvement of the quality of bread (crust, cut, color), the volume of bread and dough tolerance, but also the number of extra breads for a given amount of flour. The results are indeed given by comparison with the standard improvers.

The bread improver according to the invention is particularly useful for the preparation of Somun bread.

## Claims

1. Bread improver comprising from 90% to 95% by weight of CMC, at least two improving agents chosen among an oxidizing agent, a reducing agent, an enzyme and an emulsifier, said bread improver comprising no inulin and no cellulose.

2. Bread improver according to claim 1, comprising the following improving agents: at least one enzyme, at least one emulsifier and at least one oxidizing agent.

3. Bread improver according to claim 1 or 2, further comprising at least one hydrocolloid other than CMC.

4. Bread improver according to any one of claims 1 to 3, **characterized in that** said bread improver is in pulverulent form.

5. Bread improver according to any one of claims 1 to 4, **characterized in that** CMC has a viscosity of at least 2000 mPa.s⁻¹ in a 1% aqueous solution.

6. Process for preparing dough, comprising a step of mixing, wherein a bread improver according to any one of claims 1 to 5 is mixed with dough ingredients.

7. Process according to claim 6, **characterized in that** the dough comprises from 0.4% to 5% of said bread improver, the percentages being expressed by weight of the total flour in the dough.

8. Process according to claim 6 or 7, **characterized in that** water is added in successive small quantities.

9. Use of a bread improver according to any one of claims 1 to 5 for improving bread yield, dough tolerance, volume of bread and/or quality of bread.

10. Use of a bread improver according to claim 9 for improving bread yield, dough tolerance, volume of bread and/or quality of bread, wherein said bread is Somun bread.

## Patentansprüche

1. Backmittel umfassend von 90 Gewichts-% bis 95 Gewichts-% CMC, mindestens zwei Verbesserungsmittel ausgewählt aus einem Oxidationsmittel, einem Reduktionsmittel, einem Enzym und einem Emulgator, wobei das Backmittel kein Inulin und keine Cellulose umfasst.

2. Backmittel nach Anspruch 1, umfassend die folgenden Verbesserungsmittel: mindestens ein Enzym, mindestens einen Emulgator und mindestens ein Oxidationsmittel.

3. Backmittel nach Anspruch 1 oder 2, weiter umfassend mindestens ein anderes Hydrokolloid als CMC.

4. Backmittel nach einem der Ansprüche 1 bis 3, **dadurch gekennzeichnet, dass** das Backmittel in pulverförmiger Form ist.

5. Backmittel nach einem der Ansprüche 1 bis 4, **dadurch gekennzeichnet, dass** CMC eine Viskosität von mindestens 2000 mPa.s-1 in einer 1% wässrigen Lösung aufweist.

6. Verfahren zur Herstellung eines Teiges umfassend einen Schritt Mischen, wobei ein Backmittel nach einem der Ansprüche 1 bis 5 mit Teigbestandteilen gemischt wird.

7. Verfahren nach Anspruch 6, **dadurch gekennzeichnet, dass** der Teig von 0,4% bis 5% des Backmittels umfasst, wobei die Prozentsätze durch Gewicht des Gesamtmehls im Teig ausgedrückt sind.

8. Verfahren nach Anspruch 6 oder 7, **dadurch gekennzeichnet, dass** Wasser in aufeinander folgenden kleinen Mengen zugegeben wird.

9. Verwendung eines Backmittels nach einem der Ansprüche 1 bis 5 zur Verbesserung des Brotertrags, der Teigtoleranz, des Volumens von Brot und/oder der Qualität von Brot.

10. Verwendung eines Backmittels nach Anspruch 9, zur Verbesserung des Brotertrags, der Teigtoleranz, des Volumens von Brot und/oder der Qualität von Brot, wobei das Brot Somun-Brot ist.

## Revendications

1. Améliorant du pain, comprenant de 90 % à 95 % en poids de CMC, au moins deux agents améliorants choisis parmi un agent oxydant, un agent réducteur, une enzyme et un émulsifiant, ledit améliorant du pain ne comprenant pas d'insuline ni de cellulose.

2. Améliorant du pain selon la revendication 1, comprenant les agents améliorants suivants : au moins une enzyme, au moins un émulsifiant et au moins un agent oxydant.

3. Améliorant du pain selon la revendication 1 ou la revendication 2, comprenant en outre au moins un hydrocolloïde autre que le CMC.

4. Améliorant du pain selon l'une quelconque des revendications 1 à 3, **caractérisé en ce que** ledit améliorant du pain est sous une forme pulvérulente.

5. Améliorant du pain selon l'une quelconque des revendications 1 à 4, **caractérisé en ce que** le CMC a une viscosité d'au moins 2000 mPa.s⁻¹ dans une solution aqueuse à 1%.

6. Procédé de préparation d'une pâte, comprenant une étape de mélange, dans laquelle un améliorant du pain selon l'une quelconque des revendications 1 à 5 est mélangé avec les ingrédients de la pâte.

7. Procédé selon la revendication 6, **caractérisé en ce que** la pâte comprend de 0,4 % à 5 % dudit améliorant du pain, les pourcentages étant exprimés en poids de farine totale dans la pâte.

8. Procédé selon la revendication 6 ou la revendication 7, **caractérisé en ce que** l'eau est ajoutée en petites quantités successives.

9. Utilisation d'un améliorant du pain selon l'une quelconque des revendications 1 à 5, pour améliorer le rendement du pain, la tolérance de la pâte, le volume du pain et/ou la quantité de pain.

10. Utilisation d'un améliorant du pain selon la revendication 9, pour améliorer le rendement du pain, la tolérance de la pâte, le volume du pain et/ou la quantité de pain, ledit pain étant un pain Somun.
